(19) Europäisches Patentamt
European Patent Office
Office européen des brevets

(11) EP 1 107 492 A1

(12) **DEMANDE DE BREVET EUROPEEN**

(43) Date de publication:
**13.06.2001 Bulletin 2001/24**

(21) Numéro de dépôt: **00403391.6**

(22) Date de dépôt: **04.12.2000**

(51) Int Cl.7: **H04J 3/06**, H04J 3/12, H04B 7/26, H04L 27/00, H04L 25/02

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **10.12.1999 FR 9915602**

(71) Demandeur: **Matra Nortel Communications**
**29100 Quimper (FR)**

(72) Inventeurs:
- **Mege, Philippe**
  **92340 Bourg la Reine (FR)**
- **Belveze, Fabrice**
  **78310 Maurepas (FR)**

(74) Mandataire: **Loisel, Bertrand**
**Cabinet Plasseraud,**
**84, rue d'Amsterdam**
**75440 Paris Cédex 09 (FR)**

(54) **Procédé de signalisation dans un système de radiocommunication, émetteurs récepteurs et repeteurs pour la mise en oeuvre du procédé**

(57) Un émetteur délivre un signal radio formé à partir d'un premier signal en bande de base ($s_n$) incluant un signal de synchronisation. Le récepteur destinataire obtient un second signal en bande de base à partir du signal radio reçu, détecte le signal de synchronisation dans une portion du second signal en bande de base afin de calculer des paramètres de synchronisation et/ou d'estimation d'un canal de transmission radio, et utilise les paramètres estimés pour démoduler une autre portion du second signal en bande de base et en extraire des informations transmises. Le signal de synchronisation comprend un motif de synchronisation sélectionné par l'émetteur sur la base d'une information de signalisation (Z) à fournir à la seconde station. Le récepteur effectue une recherche de plusieurs motifs dans le second signal en bande de base afin d'obtenir l'information de signalisation en fonction du motif détecté.

FIG.1.

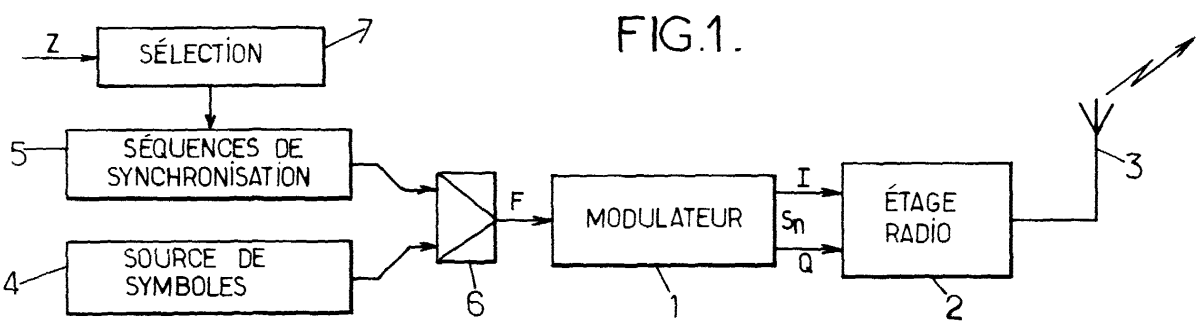


EP 1 107 492 A1

## Description

La présente invention concerne les méthodes de signalisation utilisées dans les réseaux de radiocommunication.

Dans un système de radiocommunication, il est fréquent que des informations à transmettre soient accompagnées d'un signal connu d'avance par l'émetteur et le récepteur. La détection de ce signal connu permet au récepteur de se synchroniser (en temps et/ou en fréquence) avec l'émetteur. Dans certains systèmes, cette détection permet également d'estimer des paramètres du canal de propagation radio entre l'émetteur et le récepteur afin d'effectuer ensuite une démodulation cohérente du signal pour en extraire les informations transmises.

Pour effectuer cette détection, le récepteur calcule une fonction de corrélation temporelle entre le signal reçu et le motif connu du signal émis. La synchronisation temporelle est caractérisée par la position du maximum du module de cette fonction de corrélation. La fonction de corrélation, ou sa valeur de module maximal, réalise une observation de la réponse du canal, et peut être utilisée pour estimer cette réponse. En effectuant les calculs de corrélation sur des signaux différentiels, on évite les problèmes liés à d'éventuels écarts de fréquence porteuse entre l'émetteur et le récepteur, et on peut évaluer ces écarts en vue de les corriger.

Pour la transmission d'informations de signalisation, la plupart des systèmes utilisent des canaux de contrôle sur lesquels ces informations sont transmises ou diffusées.

Parfois, certaines informations de signalisation sont fournies en réservant une portion du signal transmis sur un canal de communication dédié (quelques bits d'information). Cette méthode peut être utilisée pour faire du « vol de trame » permettant d'insérer un canal logique de signalisation dans la ressource radio supportant un canal de trafic. Ceci est utilisé notamment dans le système GSM pour intercaler un canal de contrôle associé rapide (FACCH : « fast associated control channel ») dans un canal de trafic. Un inconvénient de cette méthode est son influence négative sur le débit disponible sur le canal de trafic compte tenu du débit consommé par la portion de signal réservée (overhead).

Un but de la présente invention est de proposer une méthode simple pour communiquer des informations de signalisation dans un système utilisant des motifs de synchronisation entre l'émetteur et le récepteur.

L'invention propose ainsi un procédé de signalisation dans un système de radiocommunication, dans lequel une première station émet, à destination d'au moins une seconde station, un signal radio formé à partir d'un premier signal en bande de base incluant un signal de synchronisation comprenant au moins un motif de synchronisation sélectionné sur la base d'une information de signalisation à fournir à la seconde station, dans lequel la seconde station obtient un second signal en bande de base à partir d'un signal radio reçu, détecte le signal de synchronisation dans une portion du second signal en bande de base afin de calculer des paramètres de synchronisation et/ou d'estimation d'un canal de transmission radio, et utilise les paramètres calculés pour démoduler une autre portion du second signal en bande de base et en extraire des informations transmises, la seconde station effectuant une recherche de plusieurs motifs dans le second signal en bande de base afin d'obtenir ladite information de signalisation en fonction du motif détecté.

Les informations de signalisation sont envoyées en même temps que les motifs de synchronisation, ce qui permet d'améliorer la capacité de transmission. Plusieurs motifs de synchronisation sont définis, et l'envoi de l'un d'eux fournit l'information de signalisation au récepteur destinataire. Un tel procédé est décrit dans WO99/00927.

Si le nombre de motifs de synchronisation possibles est de la forme $2^N$, alors le procédé permet de transmettre N bits d'information de signalisation par occurrence d'un motif dans le signal. On peut aussi transmettre N bits d'information de signalisation au moyen de N motifs de synchronisation transmis successivement, chaque motif transmis étant choisi parmi deux motifs prédéterminés.

Les différents motifs de synchronisation utilisables doivent avoir de bonnes propriétés d'autocorrélation et d'intercorrélation, afin de limiter les risques de détection erronée. En d'autres termes, la fonction d'autocorrélation $AC_x(t)$ de chaque motif x présente un maximum prononcé pour un décalage temporel nul ($AC_x(0) >> AC_x(t)$ pour $t \neq 0$) et que la fonction d'intercorrélation $CC_{x,x'}(t)$ de deux motifs distincts x, x' soit inférieure d'au moins un ordre de grandeur à l'autocorrélation de l'un quelconque de ces motifs ($CC_{x,x'}(t) << AC_x(0)$).

Selon l'invention, le premier signal en bande de base est un signal complexe, et le motif de synchronisation est sélectionné dans un ensemble de motifs comprenant un premier motif x dont les parties réelle et imaginaire xr, xi ont des autocorrélations sensiblement égales et une intercorrélation sensiblement plus petite que lesdites autocorrélations ($CC_{xr,xi}(t) << AC_{xr}(0) \approx AC_{xi}(0)$ pour t quelconque), et un second motif x* complexe conjugué du premier motif.

Le fait de disposer de deux motifs de synchronisation qui sont complexes conjugués l'un de l'autre permet de simplifier les moyens requis au niveau du récepteur pour extraire l'information de signalisation. En effet, les calculs des fonctions de corrélation élémentaires des parties réelle et imaginaire du second signal en bande de base avec les parties réelle et imaginaire de l'un des deux motifs conjugués, qui sont nécessaires pour évaluer la corrélation complexe du second signal en bande de base avec ce motif, sont directement exploitables pour évaluer également la corrélation avec l'autre motif. Les propriétés d'auto- et d'intercorrélation des parties réelle et imaginaire du motif de synchronisation

assurent que ce motif complexe et son conjugué auront également de bonnes propriétés d'auto- et d'intercorrélation.

Lorsque le premier signal en bande de base est un signal complexe généré en réponse au flux de symboles numériques par une modulation de phase telle que la phase modulée soit antisymétrique en fonction des symboles du flux, une modalité ou une variante de la réalisation précédente consiste à sélectionner une séquence de synchronisation dans un ensemble déterminé comprenant au moins une première séquence, donnant lieu après modulation à un motif de synchronisation dont les parties réelle et imaginaire ont des autocorrélations sensiblement égales et une intercorrélation sensiblement plus petite que lesdites autocorrélations, et une seconde séquence opposée à la première séquence.

Cette dernière méthode correspond exactement à la précédente lorsque les motifs de synchronisation sont transmis de façon isolée.

S'ils sont immédiatement précédés ou suivis par des symboles d'information transmis, les motifs de synchronisation ne seront pas exactement complexes conjugués l'un de l'autre si la modulation et/ou le canal de propagation engendrent un effet de mémoire provoquant de l'interférence inter-symbole. Néanmoins, ils sont quasiment complexes conjugués et les propriétés d'auto- et d'intercorrélation restent satisfaisantes si la longueur des séquences de synchronisation est sensiblement plus grande que la mémoire du canal et de la modulation. Dans ce cas, le récepteur peut conserver sa simplicité en recherchant des motifs conjugués approximativement égaux aux motifs de synchronisation insérés par l'émetteur.

Pour la mise en oeuvre du procédé, l'invention propose, en tant que « seconde station », un récepteur de radiocommunication, comprenant des moyens pour produire un signal complexe en bande de base à partir d'un signal radio reçu, des moyens de détection d'un signal de synchronisation comprenant au moins un motif de synchronisation dans une portion dudit signal en bande de base, pour calculer des paramètres de synchronisation avec un émetteur et/ou d'estimation d'un canal de transmission radio entre l'émetteur et le récepteur, et des moyens de démodulation d'une autre portion dudit signal en bande de base, à l'aide des paramètres calculés, pour en extraire des informations transmises, les moyens de détection de détection étant agencés pour rechercher dans ledit signal en bande de base plusieurs motifs de synchronisation d'un ensemble déterminé de motifs, et obtenir une information de signalisation en réponse à la détection d'un motif de l'ensemble et en fonction du motif détecté, ledit ensemble de motifs comprenant un premier motif dont les parties réelle et imaginaire ont des autocorrélations sensiblement égales et une intercorrélation sensiblement plus petite que lesdites autocorrélations, et un second motif complexe conjugué du premier motif.

Pour la mise en oeuvre du procédé, l'invention propose, en tant que « première station », un émetteur de radiocommunication, comprenant des moyens d'émission, à destination d'au moins un récepteur, d'un signal radio formé à partir d'un signal complexe en bande de base incluant un signal de synchronisation pour permettre au récepteur de calculer des paramètres de synchronisation et/ou d'estimation d'un canal de transmission radio, des moyens de sélection d'au moins un motif de synchronisation dans un ensemble déterminé de motifs, sur la base d'une information de signalisation à fournir au récepteur, pour inclure le motif sélectionné dans le signal de synchronisation, ledit ensemble de motifs comprenant un premier motif dont les parties réelle et imaginaire ont des autocorrélations sensiblement égales et une intercorrélation sensiblement plus petite que lesdites autocorrélations, et un second motif complexe conjugué du premier motif.

En variante, l'émetteur de radiocommunication selon l'invention comprend des moyens de modulation pour générer un signal complexe en bande de base en réponse à un flux de symboles numériques, suivant une modulation de phase telle que la phase modulée soit antisymétrique en fonction des symboles du flux, des moyens d'émission, à destination d'au moins un récepteur, d'un signal radio formé à partir dudit signal en bande de base, et des moyens de sélection pour sélectionner une séquence de synchronisation dans un ensemble déterminé de séquences sur la base d'une information de signalisation à fournir au récepteur, la séquence sélectionnée étant incluse dans ledit flux de symboles pour générer un signal de synchronisation inclus dans ledit signal en bande de base pour permettre au récepteur de calculer des paramètres de synchronisation et/ou d'estimation d'un canal de transmission radio, ledit ensemble de séquences comprenant au moins une première séquence, donnant lieu à un motif de synchronisation dont les parties réelle et imaginaire ont des autocorrélations sensiblement égales et une intercorrélation sensiblement plus petite que lesdites autocorrélations, et une seconde séquence opposée à la première séquence.

Un autre aspect de la présente invention se rapporte à un répéteur de signaux radio comprenant des moyens pour produire un premier signal en bande de base à partir d'un signal radio reçu, des moyens de détection d'un signal de synchronisation comprenant au moins un motif de synchronisation généré en réponse à au moins une séquence de symboles de synchronisation dans une portion du premier signal en bande de base, pour calculer des paramètres de synchronisation avec un émetteur et/ou d'estimation d'un canal de transmission radio depuis cet émetteur, des moyens de démodulation d'une autre portion du premier signal en bande de base, à l'aide des paramètres calculés, pour générer un flux de symboles démodulés, des moyens pour produire un second signal en bande de base à partir du flux de symboles démodulés et de chaque séquence de symboles de synchronisation détectée, des moyens d'émission, à destination d'au moins un récepteur, d'un autre signal radio formé à partir du second signal en bande de base avec une structure de trame correspondant à une structure de trame du signal radio reçu, et des moyens de signalisation

pour transmettre au récepteur une information signalant que le répéteur est du type ci-dessus, c'est-à-dire qu'il effectue une démodulation et une remodulation des signaux radio répétés sans contrôler la structure de trame des signaux.

Ces moyens de signalisation peuvent fonctionner en insérant des symboles de signalisation à des emplacements déterminés réservés à cet effet dans le flux de symboles démodulés. Mais de préférence, ces moyens de signalisation fonctionnent conformément au procédé ci-dessus, c'est-à-dire que les moyens de production du second signal en bande de base comprennent des moyens de transformation d'au moins une séquence de symboles de synchronisation détectée, et un modulateur pour générer le second signal en bande de base en réponse au flux de symboles démodulés assorti de la séquence transformée. En variante, les moyens de production du second signal en bande de base peuvent comprendre un modulateur pour générer un signal intermédiaire en bande de base en réponse au flux de symboles démodulés assorti de la séquence détectée, et des moyens d'obtention du second signal en bande de base par transformation du signal intermédiaire en bande de base, dans un intervalle de temps correspondant à un motif de synchronisation.

L'information de signalisation codée par le motif de synchronisation reçu renseigne alors le récepteur sur le point de savoir si un tel répéteur était ou non intercalé dans la chaîne de transmission.

Dans d'autres applications du procédé, l'information de signalisation transmise peut identifier des canaux logiques partageant la même ressource radio ou encore des schémas de modulation appliqués aux trames de signal émises

D'autres particularités et avantages de la présente invention apparaîtront dans la description ci-après d'exemples de réalisation non limitatifs, en référence aux dessins annexés, dans lesquels :

- les figures 1 et 2 sont des schémas synoptiques respectifs d'un émetteur et d'un récepteur de radiocommunication selon l'invention ;
- la figure 3 est un schéma synoptique d'une variante de l'émetteur ;
- la figure 4 est un schéma synoptique d'un module de détection de motifs de synchronisation utilisable dans le récepteur de la figure 2 ;
- les figures 5 et 6 sont des schémas synoptiques respectifs d'un répéteur selon l'invention et d'un terminal récepteur correspondant ; et
- les figures 7 et 8 sont des schémas synoptiques respectifs d'un émetteur et d'un récepteur de radiocommunication selon une autre réalisation de l'invention.

L'émetteur radio représenté à titre d'exemple sur la figure 1 comprend un modulateur numérique 1 produisant un signal complexe en bande de base $s_n$ à partir d'un flux F de symboles discrets. Le signal complexe en bande de base, échantillonné à une fréquence $F_e$, a une partie réelle (voie I) et une partie imaginaire (voie Q) fournies à un étage radio 2 qui forme le signal radio émis par l'antenne 3 de l'émetteur. L'étage radio 2 convertit en analogique les parties réelle et imaginaire du signal numérique complexe $s_n$, et les utilise pour moduler deux ondes porteuses en quadrature de même fréquence. Les-ondes modulées qui en résultent sont sommées, filtrées et amplifiées pour former le signal radio émis.

Le flux F se compose de symboles discrets, par exemple binaires (±1) ou M-aires (±1, ±3, ..., ±(M-1)), à savoir des symboles d'information issus d'une source 4 et des symboles de synchronisation issus d'un générateur de séquences de synchronisation 5.

La source de symboles 4 représentée par un bloc schématique sur la figure 1 délivre des symboles d'information codés, qui comprennent des informations de trafic (voix, données, image, ...) dont la nature et la mise en forme dépendent du système de radiocommunication auquel appartient l'émetteur, ainsi que diverses informations de signalisation utiles au fonctionnement du système. Pour un ou plusieurs types d'information, la source 4 peut comprendre, de façon classique, un codeur de canal qui ajoute de la redondance aux symboles à transmettre et/ou introduit un entrelacement temporel afin de protéger ces symboles contre les erreurs de transmission.

Le générateur de séquences 5 délivre des symboles de synchronisation qui, une fois détectés par le récepteur, lui servent à acquérir des informations de synchronisation et/ou à estimer des paramètres du canal de propagation radio.

Chaque séquence de synchronisation est construite de façon classique en tenant compte des propriétés statistiques du motif de synchronisation qui en résulte dans le signal complexe $s_n$ après modulation.

Ces propriétés statistiques peuvent s'exprimer de diverses manières. Par exemple, si $x=(x_0, X_1, ..., x_{L-1})$ désigne le motif de L échantillons complexes à la fréquence $F_e$ produit par le modulateur 1 en réponse à une séquence de symboles délivrée par le générateur 5, alors la séquence est construite de façon que la fonction d'autocorrélation

$$AC_x(n) = \left| \sum_{k=0}^{L-1} x_{k+n} . x_k^* \right|^2$$

(|·| désignant le module d'un nombre complexe) présente un pic prononcé pour un décalage n = 0 ($AC_x(0)$ >> $AC_x(n)$ pour $n \neq 0$). Dans l'expression ci-dessus de la fonction d'autocorrélation $AC_x(n)$, $x_{k+n}$ pour n+k<0 (respectivement n+k $\geq$ L) désigne la valeur connue du signal $s_{n+k}$ si la séquence de synchronisation n'est pas immédiatement précédée (respectivement suivie) par des symboles d'information. Si la séquence de synchronisation est immédiatement précédée ou suivie par des symboles d'information inconnus a priori, $x_{k+n}$ pour n+k < 0 ou n+k $\geq$ L désigne une variable aléatoire ayant la même densité de probabilité que le signal $s_n$, et la propriété $AC_x(0)$>> $AC_x(n)$ pour $n \neq 0$ est vérifiée de façon statistique, les échantillons $x_0$, ..., $x_{K-1}$ pouvant dépendre des symboles d'information si la modulation et le canal ont une mémoire globale de K échantillons avec K $\geq$ 1.

Un multiplexeur 6 assemble le flux F à partir des symboles issus de la source 4 et du générateur 5, sous forme de trames qui se succèdent périodiquement et qui comprennent chacune un nombre donné de symboles.

Certaines trames peuvent comporter une séquence de synchronisation relativement longue (typiquement plusieurs dizaines de symboles) permettant au récepteur d'acquérir une synchronisation initiale avec l'émetteur. D'autres trames émises plus fréquemment peuvent comprendre des séquences de synchronisation plus courtes (par exemple moins de 20 symboles) permettant au récepteur d'affiner et de poursuivre la synchronisation. Si le récepteur effectue une démodulation cohérente, ces séquences de synchronisation connues sont également utilisables pour estimer la réponse du canal de propagation (réponse impulsionnelle ou simplement atténuation et déphasage si la mémoire de la modulation et du canal est petite devant le temps d'un symbole).

Le récepteur représenté sur la figure 2 comprend un étage radio 8 qui régénère un signal complexe en bande de base $r_n$ à partir du signal radio capté par l'antenne 10. L'étage radio 9 effectue essentiellement une amplification, un filtrage analogique, un mélange avec deux ondes en quadrature à la fréquence porteuse, un filtrage pour retenir des composantes en bande de base des signaux mélangés et une numérisation des signaux mélangés et filtrés pour produire la partie réelle (voie I) et la partie imaginaire (voie Q) du signal complexe en bande de base $r_n$.

Ce signal complexe $r_n$ est traité d'une part par un module -11 de détection de motifs de synchronisation et d'autre part par un démodulateur 12 servant à estimer les symboles d'information délivrés par la source 4 de l'émetteur.

De façon classique, le module 11 exploite la présence des séquences de synchronisation dans le signal transmis pour extraire des paramètres de synchronisation temporelle ST utiles au démodulateur 12, et éventuellement des paramètres de synchronisation fréquentielle SF fournis à l'étage radio 9 du récepteur afin d'ajuster la fréquence de son oscillateur pour l'aligner sur la fréquence porteuse utilisée par l'émetteur.

A titre d'exemple, l'information de synchronisation temporelle ST peut indiquer le décalage n pour lequel la fonction de corrélation normalisée :

$$IC_{r,x}(n) = \frac{\left| \sum_{k=0}^{L-1} r_{k+n} . x_k^* \right|^2}{\left( \sum_{k=0}^{L-1} \left| r_{k+n} \right|^2 \right) . \left( \sum_{k=0}^{L-1} \left| x_k \right|^2 \right)} \qquad (1)$$

est maximale. Dans le cas d'une modulation à phase continue (CPM), le paramètre SF peut représenter un écart de fréquence à corriger dans l'étage radio 9, par exemple donné par

$$\frac{F_e}{2\pi} \mathrm{Arg}\left( \sum_{n=0}^{L-1} r_n^* . r_{n+1} \right),$$

où Arg(.) désigne l'argument d'un nombre complexe. On notera que de nombreuses autres méthodes de synchronisation peuvent être utilisées par le module de détection 11. En particulier, l'écart de fréquence à corriger peut être évalué de façon plus fine par des méthodes utilisant une transformée en fréquence (voir demande de brevet français No. 99 11013).

La corrélation complexe

$$\Gamma_n = \sum_{k=0}^{L-1} r_{k+n}.x_k^* ,$$

pour la valeur de n qui maximise la fonction $IC_{r,x}(n)$ ou au voisinage de cette valeur, fournit des observations permettant en outre, de façon connue, d'estimer le canal de propagation entre l'émetteur et le récepteur. Si le démodulateur 12 opère une démodulation cohérente, les estimations correspondantes RC lui sont fournies par le module de détection 11.

L'information de synchronisation ST cale le démodulateur 12 sur la structure temporelle des trames et des échantillons émis, pour lui permettre d'estimer les symboles délivrés par la source 4 dans les périodes situées entre les séquences de synchronisation, et l'estimation du canal RC lui permet, le cas échéant, d'effectuer une démodulation cohérente.

La figure 4 montre schématiquement un exemple de réalisation du module 11 de détection de motifs de synchronisation. Les échantillons complexes $x_k$ du motif de synchronisation x sont stockés dans une mémoire 15 du module 11 ($0 \leq k < L$).

Le numérateur de la fonction de corrélation $IC_{r,x}(n)$ selon la relation (1) est donné par $|\Gamma_n|^2 = (A_n - D_n)^2 + (B_n + C_n)^2$, où :

$$A_n = \sum_{k=0}^{L-1} Re(r_{k+n}).Re(x_k)$$

est la corrélation, calculée par un multiplieur 16 et un accumulateur 21 intégrant sur L échantillons, entre la partie réelle $Re(r_n)$ du signal en bande de base et la partie réelle $Re(x_k)$ du motif de synchronisation, stockée dans la mémoire 15 ;

$$B_n = \sum_{k=0}^{L-1} Im(r_{k+n}).Re(x_k)$$

est la corrélation entre la partie imaginaire $Im(r_n)$ du signal en bande de base et $Re(x_k)$ (multiplieur 17 et accumulateur 22) ;

$$C_n = \sum_{k=0}^{L-1} Re(r_{k+n}).Im(x_k)$$

est la corrélation entre $Re(r_n)$ et la partie imaginaire $Im(x_k)$ du motif, stockée dans la mémoire 15 (multiplieur 18 et accumulateur 23) ; el

$$t\ D_n = \sum_{k=0}^{L-1} Im(r_{k+n}).Im(x_k)$$

est la corrélation entre $Im(r_n)$ et $Im(x_k)$ (multiplieur 19 et accumulateur 24). Le numérateur $|\Gamma_n|^2$ de la fonction de corrélation est délivré par l'unité 28 qui fait la somme des carrés des quantités $A_n$-$D_n$ et $B_n$+$C_n$ respectivement délivrées

par le soustracteur 26 et l'additionneur 27.

Le premier terme du dénominateur de la relation (1), dont le deuxième terme est constant et n'a donc pas besoin d'être calculé, est obtenu par une unité 29 qui calcule le module carré du signal complexe reçu $r_{k+n}$ sur la fenêtre considérée et par l'accumulateur 30 qui réalise la somme des modules carrés sur une fenêtre de L échantillons.

Le module de détection 11 comprend une unité de décision 32 qui détermine le maximum du rapport des grandeurs respectivement délivrées par les unités 28 et 30, et qui décide que le récepteur est synchronisé lorsque ce maximum dépasse un seuil déterminé. Dans ce cas, la position temporelle du maximum est codée dans l'information de synchronisation ST fournie au démodulateur. Si celui-ci effectue une démodulation cohérente, le nombre complexe $\Gamma_n = (A_n\text{-}D_n) + j.(B_n\text{+}D_n)$ peut être utilisé pour estimer le canal de propagation.

L'émetteur selon l'invention, représenté sur la figure 1, comporte une unité de commande 7 qui sélectionne la séquence de synchronisation produite par le générateur 5 en fonction d'une information de signalisation Z à fournir au récepteur. Le générateur 5 est donc apte à produire plusieurs séquences de synchronisation distinctes, la séquence choisie étant représentative de l'information Z.

Ces différentes séquences doivent bien entendu avoir de bonnes propriétés d'intercorrélation. D'autre part, leurs autocorrélations respectives doivent être du même ordre pour qu'elles aient des probabilités de détection similaires, soit $AC_x(0) \approx AC_{x'}(0)$ pour les motifs de synchronisation x, x' respectivement produits par le modulateur 1 en réponse à deux de ces séquences. Les bonnes propriétés d'intercorrélation signifient par exemple que la fonction d'intercorrélation

$$CC_{x,x'}(n) = \left| \sum_{k=0}^{L-1} x_{k+n} . x'^{*}_{k} \right|^2$$

est inférieure d'au moins un ordre de grandeur aux autocorrélations $AC_x(0)$ et $AC_{x'}(0)$.

Pour identifier le motif de synchronisation présent dans le signal reçu $r_n$, et donc identifier l'information de signalisation transmise Z, les moyens de détection des motifs de synchronisation peuvent comprendre plusieurs modules tels que celui décrit ci-dessus, fonctionnant en parallèle sur la base des différentes séquences possibles. La détection d'une séquence par l'un de ces modules permet alors d'effectuer la synchronisation et d'extraire l'information Z.

Un moyen connu pour générer des séquences ayant les propriétés ci-dessus est d'utiliser des codes correcteurs d'erreurs. Ceci permet de réduire la complexité de traitement de détection grâce à la structure algébrique de ces codes. A titre d'exemple, on peut utiliser un code de Reed-Muller d'ordre 1, dont la structure régulière permet de limiter la puissance de calcul requise dans le récepteur. A partir d'une séquence de synchronisation initiale, on déduit plusieurs séquences utilisables par l'émetteur en multipliant la séquence initiale par plusieurs mots de code appartenant au code correcteur considéré. Toutefois, cette méthode n'est applicable que dans le cas de signaux linéaires et de symboles binaires.

Dans l'exemple de réalisation de l'émetteur selon la figure 3, le générateur 5 délivre une seule séquence de synchronisation qui donne lieu à un motif x en sortie du modulateur 1. Ce motif x = xr + j.xi a des parties réelle et imaginaire xr, xi dont les autocorrélations sont sensiblement égales et l'intercorrélation est sensiblement plus petite que lesdites autocorrélations ($CC_{xr,xi}(n) << AC_{xr}(0) \approx AC_{xi}(0)$ pour n quelconque). Une unité 8 inverse sélectivement le signe de la seule partie imaginaire xi (ou de manière équivalente de la seule partie réelle xr) du motif x pour former le signal complexe en bande de base $s_n$ dans les zones correspondant au motif x. Cette inversion de signe a lieu uniquement lorsqu'un bit d'information de signalisation Z a une valeur déterminée (ci-après Z = 1), le signal en bande de base $s_n$ étant obtenu directement en sortie du modulateur quand Z = 0.

Le motif de synchronisation inséré dans le signal $s_n$ est alors soit le motif x soit son motif conjugué x* = xi - j.xr. Compte tenu des propriétés de corrélation des séquences réelles xr et xi, les deux motifs complexes x et x* présentent des propriétés d'intercorrélation satisfaisantes.

La détection de l'un quelconque de ces deux motifs x, x* peut être effectuée par le module 11 représenté sur la figure 4, dans lequel les éléments 33-35 représentent une complexité additionnelle négligeable. L'additionneur 33 calcule la somme $A_n\text{+}D_n$, alors que le soustracteur 34 calcule la différence $B_n\text{-}C_n$. L'unité 35 calcule alors la grandeur $|\Gamma'_n|^2 = (A_n + D_n)^2 + (B_n\text{-}C_n)^2$ qui représente le numérateur de la fonction de corrélation $IC_{r,x^*}(n)$ selon la relation (1). D'autre part, les dénominateurs des fonctions de corrélation $IC_{r,x}(n)$ et $IC_{r,x^*}(n)$ sont identiques pour les deux motifs conjugués x, x*. Il suffit donc que l'unité de décision 32 choisisse la plus grande des deux grandeurs $|\Gamma_n|^2$, $|\Gamma'_n|^2$ délivrées par les unités 28 et 35 pour examiner le critère de synchronisation. Lorsque ce critère est satisfait, la synchronisation est réalisée et l'unité 32 délivre le bit d'information Z correspondant à celui des motifs pour lequel la grandeur de décision est la plus grande (Z = 0 lorsque $|\Gamma_n|^2 > |\Gamma'_n|^2$ et Z = 1 lorsque $|\Gamma_n|^2 < |\Gamma'_n|^2$).

La méthode précédente peut être généralisée pour la transmission d'un nombre N > 1 de bits de signalisation Z. Si le motif de synchronisation x est subdivisé en N sous-motifs successifs, contigus ou non, on peut transmettre N bits en remplaçant sélectivement chacun des sous-motifs par son motif conjugué.

Si les motifs ou sous-motifs sont émis de façon continue, il est souhaitable de garantir la continuité du signal modulé $s_n$. Pour cela, on peut admettre d'utiliser le même module de détection 11 sans que les motifs ou sous-motifs de synchronisation soient exactement conjugués l'un de l'autre. C'est le cas notamment pour les modulations à enveloppe constante qui possèdent un effet de mémoire, par exemple la GMSK (« Gaussian Minimum Shift Keying »). Ceci peut être réalisé aisément si la durée de l'effet de mémoire est faible par rapport à la durée du motif ou du sous-motif de synchronisation.

Dans le cas d'une modulation à phase continue dans laquelle la phase varie linéairement en fonction des symboles du flux F, l'unité de commande 7 (figure 1) peut ainsi commander le générateur 5 pour que celui-ci délivre soit une séquence de synchronisation donnée soit la séquence opposée, en fonction d'un bit de signalisation Z. La modulation de la phase étant linéaire (ou plus généralement antisymétrique) en fonction des symboles, le remplacement d'une séquence par la séquence opposée se traduit par le remplacement du motif de synchronisation correspondant x par le motif conjugué x*, sauf aux bords du motif de synchronisation, sur une durée correspondant à la mémoire de la modulation.

Ainsi, si la longueur L des motifs de synchronisation est grande devant la longueur K de la mémoire de la modulation, les deux motifs obtenus sont quasiment conjugués l'un de l'autre, et ont des propriétés de corrélation satisfaisantes.

Pour les séquences moins longues, produisant des motifs de synchronisation dont la longueur L est du même ordre de grandeur que la mémoire K de la modulation, on pourra adopter un émetteur du genre représenté sur la figure 3. Dans ce cas, pour éviter les discontinuités de phase, on peut faire en sorte que la séquence de synchronisation soit précédée et suivie par des symboles connus dans le flux F, sur une durée correspondant à la mémoire de la modulation. Ceci a pour inconvénient d'allonger le temps requis par les séquences de synchronisation. Pour éviter cet inconvénient, on peut sélectionner préalablement plusieurs séquences produisant après modulation des motifs de synchronisation ayant les meilleures propriétés statistiques et agencer l'émetteur selon la figure 1. Dans ce dernier cas, les moyens de détection des motifs de synchronisation dans le récepteur doivent effectuer plusieurs calculs de corrélations en parallèle, ce qui n'est pas trop exigeant en termes de ressources de calcul puisque, par hypothèse, les séquences de synchronisation sont courtes.

Le procédé de signalisation décrit ci-dessus peut être utilisé dans un système de radiocommunication dans lequel des terminaux mobiles peuvent communiquer directement entre eux en mode direct et/ou par l'intermédiaire de répéteurs. A titre d'exemple, les répéteurs peuvent être de trois types :

- type 1 : répéteur simple, n'assurant aucune démodulation des signaux reçus. Un tel répéteur peut consister essentiellement en un amplificateur et un dispositif de transposition de fréquence pour retransmettre les signaux radio captés ;
- type 2 : répéteur à régénération d'horloge, assurant une démodulation du signal reçu et une remodulation du flux de symboles numériques démodulés pour former le signal radio réémis sur une fréquence transposée. Le flux de symboles démodulés n'est pas soumis à un décodage de canal en vue de corriger les erreurs de transmission pouvant affecter le signal reçu ;
- type 3 : répéteur correcteur, effectuant une démodulation du signal reçu, un décodage de canal (désentrelacement, décodage correcteur), un recodage de canal à partir de l'information décodée, et une remodulation pour former le signal radio réémis sur une fréquence transposée.

Les répéteurs de type 1 et 2 fonctionnent en mode asservi (ou asymétrique). Le terminal émetteur générant le signal radio est maître, notamment en ce qu'il fixe la structure de trame de ce signal, et le répéteur répercute cette structure de trame dans le signal répété sur une autre fréquence, avec un retard de traitement dans le cas du récepteur de type 2, compte tenu des opérations de démodulation et de remodulation effectuées.

Le répéteur de type 3 est adapté à un fonctionnement en mode maître (ou symétrique), dans lequel le répéteur correcteur est maître de la structure de trame d'une part vers le terminal émetteur et d'autre part vers le terminal récepteur. Ce répéteur est sensiblement plus complexe que ceux de types 1 et 2. En particulier, la structure de trame du signal répété est générée de façon distincte de celle du signal reçu. Ceci est dû au retard de traitement relativement long imposé par le répéteur correcteur, notamment en raison de l'entrelacement du signal servant à améliorer l'efficacité du décodeur correcteur. Compte tenu des intervalles de temps typiquement utilisés dans les trames radio (quelques dizaines de millisecondes), ce retard de traitement ne permet pas de réutiliser la structure de trame du signal reçu.

Les terminaux émetteurs et les répéteurs d'un système organisé comme indiqué ci-dessus peuvent mettre en oeuvre la présente invention pour fournir à un terminal récepteur destinataire une information de signalisation indiquant si le signal radio a ou non été répété par un répéteur de type 2. Cette information peut notamment être fournie

au moyen du motif de synchronisation long envoyé initialement par l'émetteur pour réaliser la première synchronisation du récepteur.

Pour illustrer l'utilité de cette information pour le récepteur, on considère un exemple où les signaux sont transmis selon une structure de supertrames générée par la station maître, chaque supertrame comprenant des périodes de 320 ms pour l'envoi de signaux de trafic de l'émetteur vers le récepteur, alternant avec des périodes de 40 ms pour l'envoi de signaux de signalisation, une période de 40 ms sur deux étant consacrée à la signalisation vers l'avant, c'est-à-dire de l'émetteur vers le récepteur, et l'autre période de 40 ms étant consacrée à de la signalisation vers l'arrière, c'est-à-dire du récepteur vers l'émetteur. Le récepteur n'a pas de difficulté pour l'envoi de signalisation vers l'arrière dans le cas où le signal radio est reçu en mode direct ou en mode répété avec un répéteur de type 1 : avec un intervalle de 5 ms pour la commutation de fréquence au début et à la fin de la période de 40 ms, le récepteur retourne la signalisation en alignement avec la structure de trame imposée par l'émetteur. Dans le cas d'un répéteur de type 3, il n'y a pas non plus de difficulté puisque c'est le répéteur correcteur qui impose la structure de trame pour la communication avec le récepteur.

Le cas du répéteur de type 2 est plus délicat parce que les opérations de modulation et de démodulation effectuées dans les deux sens prennent du temps (typiquement de l'ordre de 10 ms par sens), de telle sorte que l'émetteur peut manquer une partie de la signalisation qui lui est retournée puisqu'il risque de recevoir celle-ci en partie en dehors de la période de 40 ms qu'il a fixée, et à la fin de laquelle il doit encore se réserver environ 5 ms pour commuter sa fréquence.

Pour assurer une bonne transmission des signaux de signalisation vers l'arrière dans le cas où un répéteur de type 2 est sur le trajet, il y a avantage à utiliser pour le codage de canal un code systématique, de préférence de rendement élevé. Il est donc judicieux d'utiliser un code en blocs systématique. En revanche, ce code en blocs ne sera pas optimal pour la transmission de la signalisation vers l'arrière dans le cas du mode direct ou dans le cas où les signaux sont relayés par un répéteur de type 1 ou 3. Il est alors préférable d'utiliser un code convolutif, de moindre rendement (par exemple 1/2), avec un décodage souple procurant de meilleurs performances.

On peut ainsi prévoir deux formats de transmission différents pour l'émission de la signalisation vers l'arrière. Pour savoir quel format employer, le récepteur doit avoir identifié la présence éventuelle d'un répéteur de type 2 dans la chaîne de transmission des signaux qu'il a reçu, d'où l'utilité de l'information de signalisation précitée.

Les signaux élaborés par l'émetteur d'origine, du moins certains d'entre eux, comprennent des motifs de synchronisation reflétant des séquences de synchronisation insérées dans le flux de symboles numériques. Ces motifs de synchronisation ne sont pas modifiés par les répéteurs de type 1 ou 3. En revanche, un ou plusieurs de ces motifs (notamment le motif de synchronisation initiale) sont modifiés par le répéteur de type 2, ce qui permet au récepteur de détecter la présence de ce répéteur de type 2 par suite de la détection du motif de synchronisation modifié à la place du motif de synchronisation d'origine.

Des schémas synoptiques d'un tel répéteur de type 2 et d'un terminal récepteur correspondant sont respectivement donnés aux figures 5 et 6, dans lesquelles des références numériques identiques à celles précédemment utilisées désignent des éléments de même nature.

La partie réception du répéteur comprend un étage radio 9 qui produit un signal en bande de base $r'_n$ à partir du signal radio capté par l'antenne 10 en provenance de l'émetteur d'origine. Une détection du motif de synchronisation (d'origine) est effectuée par le module 11 pour fournir les paramètres requis par le démodulateur 12, et éventuellement par l'étage radio 9. Le démodulateur 12 génère un flux de symboles démodulés à partir des portions du signal en bande de base $r'_n$ situées en dehors des motifs de synchronisation.

Ce démodulateur 12 remplace la source de symbole 4 dans le schéma d'émetteur de la figure 1.

La partie émission du répéteur de la figure 5 comprend en outre un générateur de séquences de symboles 5 qui produit la séquence de synchronisation modifiée caractéristique du répéteur de type 2, un multiplexeur 6 qui réassemble le flux de symboles F avec la séquence modifiée, un modulateur 1 et un étage radio 2 attaquant l'antenne 3.

Dans une variante de réalisation, le générateur 5 produit la même séquence que l'émetteur d'origine (où cette séquence est obtenue par démodulation du signal $r'_n$), et le changement du motif de synchronisation est effectué en changeant le signe de la seule partie imaginaire (ou de la seule partie réelle) du signal en bande de base $s_n$ fourni à l'étage radio 2, comme indiqué en trait interrompu par le bloc 8 sur la figure 5. Dans ce dernier cas, le répéteur se comporte comme un émetteur du genre représenté sur la figure 3, l'information Z indiquant s'il est de type 2 ou de type 1 ou 3.

La figure 6 montre un terminal incorporant un récepteur semblable à celui de la figure 2, le module de détection 11 étant capable d'extraire le bit d'information Z défini par la séquence de synchronisation qui a été détectée. Ce module 11 est par exemple conforme à celui de la figure 4. Pour la partie émission, la station comporte une source de symboles 40, représentée schématiquement sur un seul bloc sur la figure 6 et qui produit les symboles à moduler à l'exception de ceux relatifs à la signalisation vers l'arrière. Ces derniers symboles sont produits à partir d'une source d'information de signalisation 41, par un codage redondant.

En fonction du bit Z, extrait par le module de détection 11, ce codage redondant est appliqué soit par un

codeur en blocs systématique 42 (quand Z indique la détection du motif de synchronisation modifié), soit par un codeur convolutif 43 (quand Z indique la détection du motif d'origine). Un multiplexeur 44 insère les symboles délivrés par le codeur 42 ou 43 dans ceux issus de la source 40, conformément à la structure de trame avec laquelle le module de détection 11 a acquis la synchronisation. Le modulateur 45 génère un signal en bande de base $s'_n$ à partir du flux de symboles produit par le multiplexeur 44, et ce signal $s'_n$ est traité par la partie émission de l'étage radio 9 qui forme le signal radio réémis par le terminal.

Dans la réalisation illustrée par les figures 7 et 8, l'information de signalisation Z communiquée au récepteur au moyen des motifs de synchronisation sert d'une part à multiplexer des canaux logiques sur le même canal physique de transmission, et d'autre part à identifier le schéma de modulation utilisé pour générer les signaux radio.

Le modulateur mixte 1 de l'émetteur de la figure 7 est agencé pour pouvoir fonctionner selon deux schémas de modulation.

Il comprend un modulateur à phase continue 50 qui, en fonction des symboles M-aires $a_i$ qui lui sont soumis à la cadence 1/T, produit pour $p.T \leq t < (p+1).T$ une forme d'onde

$$S(t) = \exp\left[2j\pi h.\left(\sum_{i=-\infty}^{p} a_i.q(t-i.T)\right)\right],$$

où h est l'indice de modulation et q(t) l'impulsion de phase de la modulation, avec q(t) = 1 pour $t \geq K.T$, K étant la mémoire de la modulation exprimée en nombre de symboles M-aires. La forme d'onde S(t) est échantillonnée à la fréquence $F_e$ pour former le signal en bande de base $s_n$. Dans l'exemple de la figure 7, les symboles du flux F sont binaires à valeurs 0 ou 1, et convertis en symboles quaternaires $a_i$ à valeurs ±1 et ±3 par une unité 53 à l'entrée du modulateur CPM 50.

Le modulateur 1 comprend également un codeur à redondance 51 fonctionnant par exemple selon le code convolutif CC(2,1,3). Ce codeur 51 est mis en service en amont du modulateur CPM 50 uniquement lorsque des commutateurs 52 sont positionnés de façon correspondante par l'unité de sélection et de commande 7. Le modulateur mixte 1 traite le flux de symboles F issu du multiplexeur 6. Lorsque le codeur convolutif 51 est en service, le modulateur mixte 1 applique une modulation codée (voir G. Ungerboeck « Channel Coding with Multilevel/Phase Signals », IEEE Transactions on Information Theory, Vol. IT-28, No. 1, janvier 1982). Lorsque le codeur convolutif 51 n'est pas en service, la modulation est non codée, et la cadence des symboles dans le flux F est double. La modulation codée procure en principe un meilleure qualité de transmission, mais avec un débit plus faible (voir EP-A-0 896 443).

Dans l'exemple représenté sur la figure 7, la source de symboles 4 comprend une unité 55 d'émission sur un canal de trafic (TCH), avec un débit de symboles sélectionné par l'unité de commande 7 conformément au type de modulation appliqué. La source 4 comprend également une unité 56 définissant un canal de contrôle associé de type FACCH, sur lequel la modulation codée est toujours appliquée. La différenciation des canaux logiques TCH et FACCH est opérée par l'unité de commande 7 qui contrôle le multiplexeur 6.

Le générateur de séquences de synchronisation 5 est prévu pour insérer deux motifs de synchronisation courts par trame du signal en bande de base $s_n$. Les séquences correspondantes sont déterminées au préalable comme indiqué ci-dessus, en minimisant les intercorrélations entre les motifs de synchronisation correspondants.

A titre d'exemple, dans le cas où le modulateur CPM 50 applique la modulation quaternaire d'indice 1/3 décrite en exemple dans EP-A-0 936 784, les motifs peuvent être générés à partir des séquences de symboles indiquées dans le Tableau I, la première séquence de chaque trame étant précédée par des symboles $a_i$ mis à zéro (phase constante) et suivie par des symboles d'information inconnus a priori, tandis que la seconde séquence de chaque trame est précédée par des symboles d'information inconnus a priori et suivie par des symboles $a_i$ mis à zéro.

TABLEAU I

| Canal logique / modulation | 1ère séquence | 2ème séquence |
|---|---|---|
| FACCH / codée | | |
| Séquence binaire (F)<br>Séquence quaternaire ($a_i$) | 0 1 0 1 0 1<br>-3 -1 -3 +3 -3 +3 | 0 1 0 0 0 1<br>-3 -1 -3 -1 -3 -1 |
| TCH / codée | | |
| Séquence binaire (F)<br>Séquence quaternaire ($a_i$) | 0 0 1 0 0 1<br>-3 -3 +1 -3 -1 +1 | 1 1 1 0 1 1<br>-1 -1 +3 -1 -1 +1 |

TABLEAU I (suite)

| Canal logique / modulation<br>TCH / non codée | 1ère séquence | 2ème séquence |
|---|---|---|
| Séquence binaire (F)<br>Séquence quaternaire ($a_i$) | 1 0 0 0 0 1 1 0 1 0 1 0<br>-1 -3 +1 -1 -1 -1 | 0 1 0 1 0 1 1 0 1 1 0 1<br>+1 +1 +1 -1 +3 +1 |

Dans le récepteur de la figure 8, les moyens 11 de détection des motifs de synchronisation effectuent en parallèle une recherche des motifs associés aux séquences ci-dessus. Selon la séquence identifiée (information de signalisation Z), les moyens de détection 11 commandent :

- le démodulateur 12 qui peut fonctionner de façon classique selon l'algorithme de Viterbi, avec soit un treillis de démodulation simple 60 pour les cas de modulation non codée sur le canal TCH, soit un super-treillis 61 intégrant les états de modulation et de codage convolutif afin d'obtenir le gain de la modulation codée sur le TCH ou le FACCH ;
- le démultiplexeur 62 qui oriente le flux binaire délivré par le démodulateur 12 soit vers les organes 63 de traitement du canal de trafic TCH, soit vers les organes 64 de traitement du canal de signalisation FACCH ;
- les organes 63 de traitement du canal de trafic TCH pour indiquer quel est le débit sur ce canal.

Le système de radiocommunication comportant des émetteurs selon la figure 7 et des récepteurs selon la figure 8 permet avantageusement d'insérer un canal de signalisation associé dans un canal de trafic par un mécanisme de type « vol de trame » sans ajouter d'overhead. Il est également avantageux de pouvoir sélectionner trame par trame le schéma de modulation employé, ce qui permet d'adapter dynamiquement le débit instantané sur le canal de trafic.

On notera que les informations de signalisation susceptibles d'être transmises entre des émetteurs et récepteurs fonctionnant comme expliqué en référence aux figures 1 à 4 peuvent être de nature très diverse, les exemples d'application selon les figures 5-6 et 7-8 n'étant pas limitatifs.

Dans une variante des modes de réalisation précédemment décrits, la détection des motifs de synchronisation est effectué sur la base d'un signal différentiel en bande de base, correspondant à $r_n.r_{n-1}^*$. Dans ce cas, les propriétés de corrélation désirées doivent bien entendu être respectées à l'égard des motifs de synchronisation différentiels $x_k.x_{k-1}^*$.

## Revendications

1. Procédé de signalisation dans un système de radiocommunication, dans lequel une première station émet, à destination d'au moins une seconde station, un signal radio formé à partir d'un premier signal complexe en bande de base ($s_n$) généré en réponse à un flux de symboles numériques (F) suivant une modulation de phase telle que la phase modulée soit antisymétrique en fonction des symboles du flux, dans lequel le premier signal en bande de base ($s_n$) comporte un signal de synchronisation généré en réponse à au moins une séquence de synchronisation incluse dans ledit flux de symboles et sélectionnée dans un ensemble déterminé sur la base d'une information de signalisation (Z) à fournir à la seconde station, dans lequel la seconde station obtient un second signal en bande de base ($r_n$) à partir d'un signal radio reçu, détecte le signal de synchronisation dans une portion du second signal en bande de base afin de calculer des paramètres de synchronisation et/ou d'estimation d'un canal de transmission radio, et utilise les paramètres calculés pour démoduler une autre portion du second signal en bande de base et en extraire des informations transmises, la seconde station effectuant une recherche de plusieurs motifs dans le second signal en bande de base afin d'obtenir ladite information de signalisation en fonction du motif détecté, caractérisé en ce que ledit ensemble de séquences comprend au moins une première séquence, donnant lieu à un motif de synchronisation dont les parties réelle et imaginaire ont des autocorrélations sensiblement égales et une intercorrélation sensiblement plus petite que lesdites autocorrélations, et une seconde séquence opposée à la première séquence.

2. Procédé selon la revendication 1, dans lequel la seconde station mémorise les parties réelle et imaginaire d'un premier motif de synchronisation correspondant à une séquence d'une paire de séquences opposées dudit ensemble, et la détection du signal de synchronisation comprend les étapes suivantes :

   - calcul d'une première corrélation ($A_n$) entre la partie réelle du second signal en bande de base ($r_n$) et la partie réelle du premier motif de synchronisation ;

- calcul d'une seconde corrélation ($B_n$) entre la partie imaginaire du second signal en bande de base et la partie imaginaire du premier motif de synchronisation ;
- calcul d'une troisième corrélation ($C_n$) entre la partie réelle du second signal en bande de base et la partie imaginaire du premier motif de synchronisation ;
- calcul d'une quatrième corrélation ($D_n$) entre la partie imaginaire du second signal en bande de base et la partie réelle du premier motif de synchronisation ;
- calcul d'une première grandeur de décision ($|\Gamma_n|^2$) donnée par le carré de la différence entre les première et seconde corrélations plus le carré de la somme des troisième et quatrième corrélations ;
- calcul d'une seconde grandeur de décision ($|\Gamma'_n|^2$) donnée par le carré de la somme des première et seconde corrélations plus le carré de la différence entre les troisième et quatrième corrélations ;
- lorsqu'un critère de détection est vérifié par l'une au moins des première et seconde grandeurs de décision, détection du premier motif de synchronisation si la première grandeur de décision est supérieure à la seconde grandeur de décision, détection d'un second motif de synchronisation, correspondant à la séquence opposée à celle auquel correspond le premier motif de synchronisation, si la seconde grandeur de décision est supérieure à la première grandeur de décision, et obtention d'un bit d'information de signalisation (Z) dont la valeur diffère selon que le premier ou le second motif a été détecté.

**3.** Procédé de signalisation dans un système de radiocommunication, dans lequel une première station émet, à destination d'au moins une seconde station, un signal radio formé à partir d'un premier signal complexe en bande de base ($s_n$) incluant un signal de synchronisation comprenant au moins un motif de synchronisation sélectionné sur la base d'une information de signalisation (Z) à fournir à la seconde station, dans lequel la seconde station obtient un second signal en bande de base ($r_n$) à partir d'un signal radio reçu, détecte le signal de synchronisation dans une portion du second signal en bande de base afin de calculer des paramètres de synchronisation et/ou d'estimation d'un canal de transmission radio, et utilise les paramètres calculés pour démoduler une autre portion du second signal en bande de base et en extraire des informations transmises, la seconde station effectuant une recherche de plusieurs motifs dans le second signal en bande de base afin d'obtenir ladite information de signalisation en fonction du motif détecté, caractérisé en ce que le motif de synchronisation est sélectionné dans un ensemble de motifs comprenant un premier motif dont les parties réelle et imaginaire ont des autocorrélations sensiblement égales et une intercorrélation sensiblement plus petite que lesdites autocorrélations, et un second motif complexe conjugué du premier motif.

**4.** Procédé selon la revendication 3, dans lequel la détection du signal de synchronisation comprend les étapes suivantes :

- calcul d'une première corrélation ($A_n$) entre la partie réelle du second signal en bande de base et la partie réelle du premier motif ;
- calcul d'une seconde corrélation ($B_n$) entre la partie imaginaire du second signal en bande de base et la partie imaginaire du premier motif ;
- calcul d'une troisième corrélation ($C_n$) entre la partie réelle du second signal en bande de base et la partie imaginaire du premier motif ;
- calcul d'une quatrième corrélation ($D_n$) entre la partie imaginaire du second signal en bande de base et la partie réelle du premier motif ;
- calcul d'une première grandeur de décision ($|\Gamma_n|^2$) donnée par le carré de la différence entre les première et seconde corrélations plus le carré de la somme des troisième et quatrième corrélations ;
- calcul d'une seconde grandeur de décision ($|\Gamma'_n|^2$) donnée par le carré de la somme des première et seconde corrélations plus le carré de la différence entre les troisième et quatrième corrélations ;
- lorsqu'un critère de détection est vérifié par l'une au moins des première et seconde grandeurs de décision, détection du premier motif si la première grandeur de décision est supérieure à la seconde grandeur de décision, détection du second motif si la seconde grandeur de décision est supérieure à la première grandeur de décision, et obtention d'un bit d'information de signalisation (Z) dont la valeur diffère selon que le premier ou le second motif a été détecté.

**5.** Procédé selon l'une quelconque des revendications précédentes, dans lequel la première station est un répéteur de signaux radio, et ladite information de signalisation comporte une information dépendant des types de traitement effectués par ledit répéteur sur les signaux radio.

**6.** Procédé selon la revendication 5, dans lequel l'information de signalisation (Z) diffère selon que le répéteur est ou non d'un type effectuant une démodulation et une remodulation des signaux répétés sans contrôler une structure

de trame des signaux, et dans lequel la seconde station renvoie vers le répéteur des signaux porteurs de signalisation selon un premier format lorsque l'information de signalisation obtenue n'indique pas que la première station est un répéteur dudit type, et selon un second format distinct du premier format lorsque l'information de signalisation obtenue indique que la première station est un répéteur dudit type.

**7.** Procédé selon la revendication 6, dans lequel le répéteur effectue une transformation déterminée de motif de synchronisation dans les signaux répétés uniquement s'il est un répéteur dudit type.

**8.** Procédé selon les revendications 1 et 7, dans lequel ladite transformation consiste à remplacer, dans les signaux démodulés, au moins une première séquence de l'ensemble, détectée par le répéteur, par une seconde séquence distincte de l'ensemble.

**9.** Procédé selon la revendication 8, dans lequel le premier signal en bande de base ($s_n$) est un signal complexe généré en réponse au flux de symboles numériques (F) par une modulation de phase telle que la phase modulée soit antisymétrique en fonction des symboles du flux, dans lequel la première séquence donne lieu à un motif de synchronisation dont les parties réelle et imaginaire ont des autocorrélations sensiblement égales et une intercorrélation sensiblement plus petite que lesdites autocorrélations, et dans lequel la seconde séquence de l'ensemble est l'opposée de la première séquence.

**10.** Procédé selon les revendications 3 et 7, dans lequel ladite transformation consiste à inverser le signe de l'une seulement des parties réelle et imaginaire du premier signal en bande de base formé par remodulation.

**11.** Procédé selon l'une quelconque des revendications précédentes, dans lequel le second signal en bande de base ($r_n$) obtenu par la seconde station est un signal différentiel.

**12.** Procédé selon l'une quelconque des revendications précédentes, dans lequel le premier signal en bande de base ($s_n$) comporte des trames successives, pouvant appartenir à au moins deux canaux logiques différents, et dans lequel chaque trame du premier signal en bande de base comporte au moins un motif de synchronisation sélectionné par la première station sur la base d'une information de signalisation identifiant le canal logique auquel appartient ladite trame.

**13.** Procédé selon l'une quelconque des revendications précédentes, dans lequel le premier signal en bande de base ($s_n$) comporte des trames successives, dans lequel chaque trame du premier signal en bande de base du premier signal en bande de base ($s_n$) est générée en réponse à un flux de symboles numériques (F) suivant une modulation sélectionnée parmi plusieurs modulations possibles, et dans lequel chaque trame du premier signal en bande de base comporte au moins un motif de synchronisation sélectionné par la première station sur la base d'une information de signalisation identifiant la modulation suivant laquelle ladite trame est générée.

**14.** Procédé selon la revendication 13, dans lequel les modulations possibles comprennent une modulation codée et une modulation non codée.

**15.** Récepteur de radiocommunication, comprenant des moyens (9) pour produire un signal complexe en bande de base ($r_n$) à partir d'un signal radio reçu, des moyens (11) de détection d'un signal de synchronisation comprenant au moins un motif de synchronisation dans une portion dudit signal en bande de base, pour calculer des paramètres de synchronisation avec un émetteur et/ou d'estimation d'un canal de transmission radio entre l'émetteur et le récepteur, et des moyens (12) de démodulation d'une autre portion dudit signal en bande de base, à l'aide des paramètres calculés, pour en extraire des informations transmises, les moyens de détection (11) de détection étant agencés pour rechercher dans ledit signal en bande de base plusieurs motifs de synchronisation d'un ensemble déterminé de motifs, et obtenir une information de signalisation (Z) en réponse à la détection d'un motif de l'ensemble et en fonction du motif détecté, caractérisé en ce que ledit ensemble de motifs comprend un premier motif dont les parties réelle et imaginaire ont des autocorrélations sensiblement égales et une intercorrélation sensiblement plus petite que lesdites autocorrélations, et un second motif complexe conjugué du premier motif.

**16.** Récepteur selon la revendication 15, comprenant des moyens de mémorisation des parties réelle et imaginaire du premier motif, dans lequel les moyens de détection du signal de synchronisation comprennent :

- des moyens de calcul d'une première corrélation ($A_n$) entre la partie réelle du signal en bande de base ($r_n$) et la partie réelle du premier motif ;

- des moyens de calcul d'une seconde corrélation ($B_n$) entre la partie imaginaire du signal en bande de base et la partie imaginaire du premier motif ;
- des moyens de calcul d'une troisième corrélation ($C_n$) entre la partie réelle du signal en bande de base et la partie imaginaire du premier motif;
- des moyens de calcul d'une quatrième corrélation ($D_n$) entre la partie imaginaire du signal en bande de base et la partie réelle du premier motif;
- des moyens de calcul d'une première grandeur de décision ($|\Gamma_n|^2$) donnée par le carré de la différence entre les première et seconde corrélations plus le carré de la somme des troisième et quatrième corrélations ;
- des moyens de calcul d'une seconde grandeur de décision ($|\Gamma'_n|^2$) donnée par le carré de la somme des première et seconde corrélations plus le carré de la différence entre les troisième et quatrième corrélations ;
- des moyens de décision en réponse à la vérification d'un critère de détection par l'une au moins des première et seconde grandeurs de décision, pour détecter le premier motif si la première grandeur de décision est supérieure à la seconde grandeur de décision, pour détecter le second motif si la seconde grandeur de décision est supérieure à la première grandeur de décision, et pour obtenir un bit d'information de signalisation (Z) dont la valeur diffère selon que le premier ou le second motif a été détecté.

**17.** Récepteur selon l'une quelconque des revendications 15 ou 16, dans lequel ladite information de signalisation comporte une information (Z) qui diffère selon que l'émetteur est ou non un répéteur d'un type effectuant une démodulation et une remodulation des signaux répétés sans contrôler une structure de trame des signaux, le récepteur comprenant en outre des moyens d'émission (41-43) pour renvoyer vers l'émetteur des signaux porteurs de signalisation, selon un premier format lorsque l'information de signalisation obtenue n'indique pas que l'émetteur est un répéteur dudit type, et selon un second format distinct du premier format lorsque l'information de signalisation obtenue indique que l'émetteur est un répéteur dudit type.

**18.** Récepteur selon l'une quelconque des revendications 15 à 17, dans lequel ledit signal en bande de base ($r_n$) comporte des trames successives, pouvant appartenir à au moins deux canaux logiques différents, et comportant chacune au moins un motif de synchronisation, le récepteur comprenant en outre des moyens pour affecter à l'un des canaux logiques les informations obtenues par les moyens de démodulation (12) relativement à chaque trame, ledit canal logique étant choisi en fonction de l'information de signalisation obtenue en réponse à la détection d'un motif de l'ensemble au sein de ladite trame.

**19.** Récepteur selon l'une quelconque des revendications 15 à 18, dans lequel ledit signal en bande de base ($r_n$) comporte des trames successives comportant chacune au moins un motif de synchronisation, et dans lequel les moyens de détection sont agencés pour commander les moyens de démodulation (12) de façon à choisir un type de démodulation à appliquer à chaque trame du signal en bande de base, parmi plusieurs types de démodulation possibles, en fonction de l'information de signalisation obtenue en réponse à la détection d'un motif de l'ensemble au sein de ladite trame.

**20.** Emetteur de radiocommunication, comprenant des moyens de modulation (1) pour générer un signal complexe en bande de base ($s_n$) en réponse à un flux de symboles numériques (F), suivant une modulation de phase telle que la phase modulée soit antisymétrique en fonction des symboles du flux, des moyens (2) d'émission, à destination d'au moins un récepteur, d'un signal radio formé à partir dudit signal en bande de base ($s_n$), et des moyens de sélection (7) pour sélectionner une séquence de synchronisation dans un ensemble déterminé de séquences sur la base d'une information de signalisation (Z) à fournir au récepteur, la séquence sélectionnée étant incluse dans ledit flux de symboles pour générer un signal de synchronisation inclus dans ledit signal en bande de base ($s_n$) pour permettre au récepteur de calculer des paramètres de synchronisation et/ou d'estimation d'un canal de transmission radio, caractérisé en ce que ledit ensemble de séquences comprend au moins une première séquence, donnant lieu à un motif de synchronisation dont les parties réelle et imaginaire ont des autocorrélations sensiblement égales et une intercorrélation sensiblement plus petite que lesdites autocorrélations, et une seconde séquence opposée à la première séquence.

**21.** Emetteur de radiocommunication, comprenant des moyens (2) d'émission, à destination d'au moins un récepteur, d'un signal radio formé à partir d'un signal complexe en bande de base ($s_n$) incluant un signal de synchronisation pour permettre au récepteur de calculer des paramètres de synchronisation et/ou d'estimation d'un canal de transmission radio, des moyens (7 ; 8) de sélection d'au moins un motif de synchronisation dans un ensemble déterminé de motifs, sur la base d'une information de signalisation (Z) à fournir au récepteur, pour inclure le motif sélectionné dans le signal de synchronisation, caractérisé en ce que ledit ensemble de motifs comprend un premier motif dont les parties réelle et imaginaire ont des autocorrélations sensiblement égales et une intercorrélation sensiblement

plus petite que lesdites autocorrélations, et un second motif complexe conjugué du premier motif.

**22.** Emetteur selon l'une quelconque des revendications 20 ou 21, dans lequel ledit signal en bande de base ($s_n$) comporte des trames successives, pouvant appartenir à au moins deux canaux logiques différents, et dans-lequel les moyens de sélection (7) sont agencés pour que chaque trame dudit signal en bande de base comporte au moins un motif de synchronisation sélectionné sur la base d'une information de signalisation identifiant le canal logique auquel appartient ladite trame.

**23.** Emetteur selon l'une quelconque des revendications 20 à 22, dans lequel ledit signal en bande de base ($s_n$) comporte des trames successives, dans lequel chaque trame du signal en bande de base du premier signal en bande de base ($s_n$) est générée en réponse à un flux de symboles numériques (F) suivant une modulation sélectionnée parmi plusieurs modulations possibles, et dans lequel les moyens de sélection (7) sont agencés pour que chaque trame du signal en bande de base comporte au moins un motif de synchronisation sélectionné sur la base d'une information de signalisation identifiant la modulation suivant laquelle ladite trame est générée.

**24.** Répéteur de signaux radio, comprenant des moyens (9) pour produire un premier signal en bande de base ($r'_n$) à partir d'un signal radio reçu, des moyens (11) de détection d'un signal de synchronisation comprenant au moins un motif de synchronisation généré en réponse à au moins une séquence de symboles de synchronisation dans une portion du premier signal en bande de base, pour calculer des paramètres de synchronisation avec un émetteur et/ou d'estimation d'un canal de transmission radio depuis l'émetteur, des moyens (12) de démodulation d'une autre portion du premier signal en bande de base, à l'aide des paramètres calculés, pour générer un flux de symboles démodulés, des moyens pour produire un second signal en bande de base ($s_n$) à partir du flux de symboles démodulés et de chaque séquence de symboles de synchronisation détectée, et des moyens (2) d'émission, à destination d'au moins un récepteur, d'un autre signal radio formé à partir du second signal en bande de base avec une structure de trame correspondant à une structure de trame du signal radio reçu, **caractérisé en ce que** les moyens de production du second signal en bande de base comprennent des moyens (5) de transformation d'au moins une séquence de symboles de synchronisation détectée, et un modulateur (1) pour générer le second signal en bande de base en réponse au flux de symboles démodulés assorti de la séquence transformée.

**25.** Répéteur selon la revendication 24, dans lequel lesdits signaux en bande de base ($r'_n$,$s_n$) sont des signaux complexes générés par une modulation de phase telle que la phase modulée soit antisymétrique en fonction des symboles à moduler, dans lequel ledit motif de synchronisation a des parties réelle et imaginaire qui ont des autocorrélations sensiblement égales et une intercorrélation sensiblement plus petite que lesdites autocorrélations, et dans lequel les moyens de transformation comprennent des moyens (5) d'inversion du signe des symboles de la séquence de synchronisation détectée.

**26.** Répéteur de signaux radio, comprenant des moyens (9) pour produire un premier signal en bande de base ($r'_n$) à partir d'un signal radio reçu, des moyens (11) de détection d'un signal de synchronisation comprenant au moins un motif de synchronisation généré en réponse à au moins une séquence de symboles de synchronisation dans une portion du premier signal en bande de base, pour calculer des paramètres de synchronisation avec un émetteur et/ou d'estimation d'un canal de transmission radio depuis l'émetteur, des moyens (12) de démodulation d'une autre portion du premier signal en bande de base, à l'aide des paramètres calculés, pour générer un flux de symboles démodulés, des moyens pour produire un second signal en bande de base à partir du flux de symboles démodulés et de chaque séquence de symboles de synchronisation détectée, et des moyens (2) d'émission, à destination d'au moins un récepteur, d'un autre signal radio formé à partir du second signal en bande de base avec une structure de trame correspondant à une structure de trame du signal radio reçu, **caractérisé en ce que** les moyens de production du second signal en bande de base comprennent un modulateur (1) pour générer un signal intermédiaire en bande de base en réponse au flux de symboles démodulés assorti de la séquence détectée, et des moyens (8) d'obtention du second signal en bande de base par transformation du signal intermédiaire en bande de base, dans un intervalle de temps correspondant à un motif de synchronisation.

**27.** Répéteur selon la revendication 26, dans lequel, lesdits signaux en bande de base ($r'_n$,$s_n$) étant des signaux complexes, ledit motif de synchronisation a des parties réelle et imaginaire qui ont des autocorrélations sensiblement égales et une intercorrélation sensiblement plus petite que lesdites autocorrélations, et dans lequel ladite transformation consiste à inverser le signe de l'une seulement des parties réelle et imaginaire du signal intermédiaire en bande de base généré par le modulateur (1).

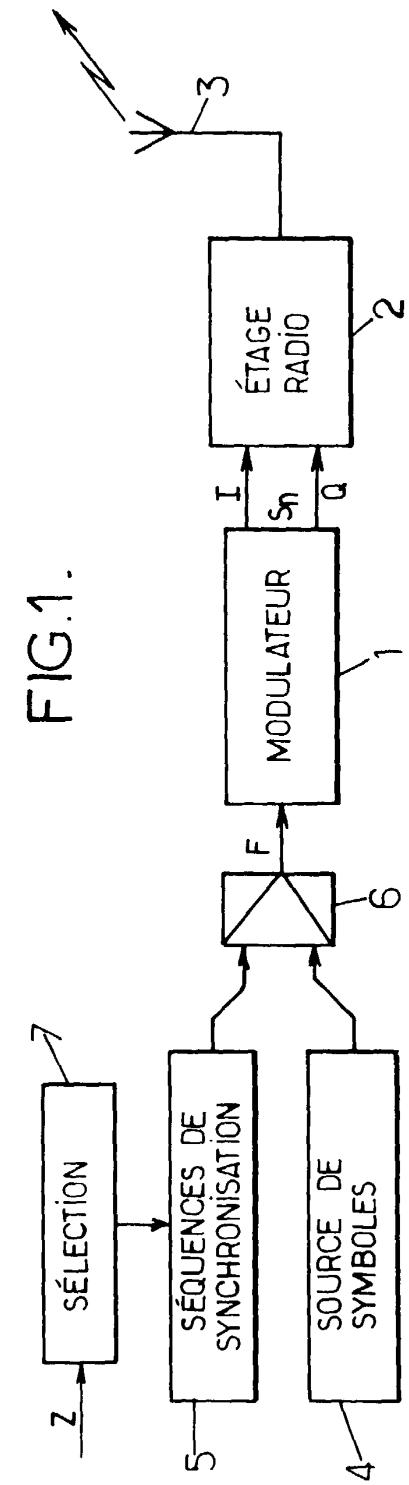
SÉLECTION
Z
7
SÉQUENCES DE SYNCHRONISATION
5
SOURCE DE SYMBOLES
4
6
F
MODULATEUR
1
I
Sn
Q
ÉTAGE RADIO
2
3

FIG.1.

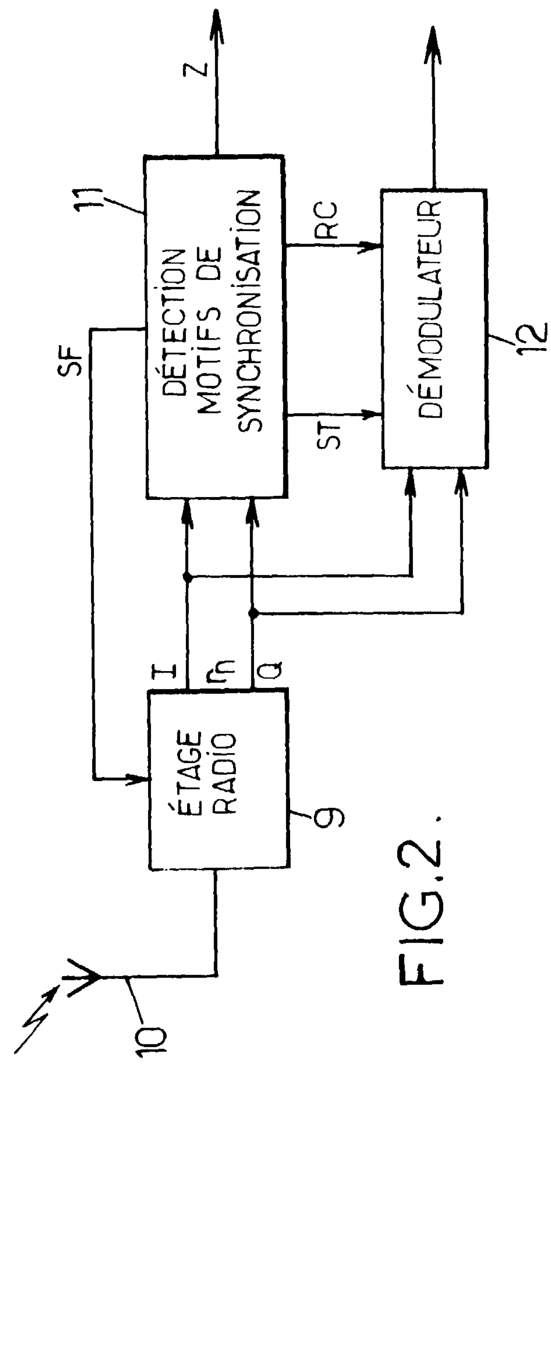
10
ÉTAGE RADIO
9
SF
I
rn
Q
DÉTECTION MOTIFS DE SYNCHRONISATION
11
Z
RC
ST
DÉMODULATEUR
12

FIG.2.

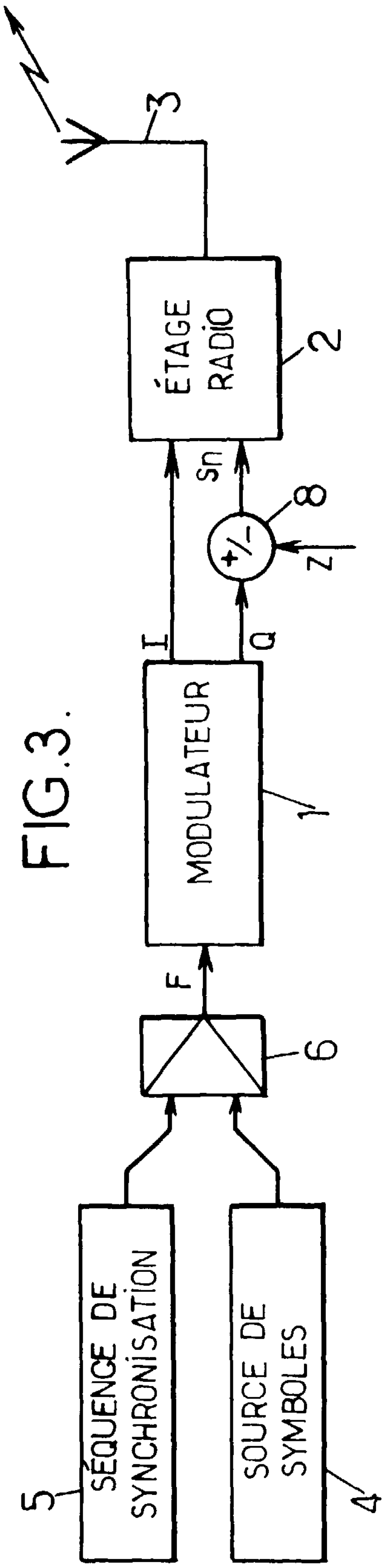
SÉQUENCE DE SYNCHRONISATION
SOURCE DE SYMBOLES
MODULATEUR
ÉTAGE RADIO
5
4
6
F
1
I
Q
8
Z
Sn
2
3

FIG.3.

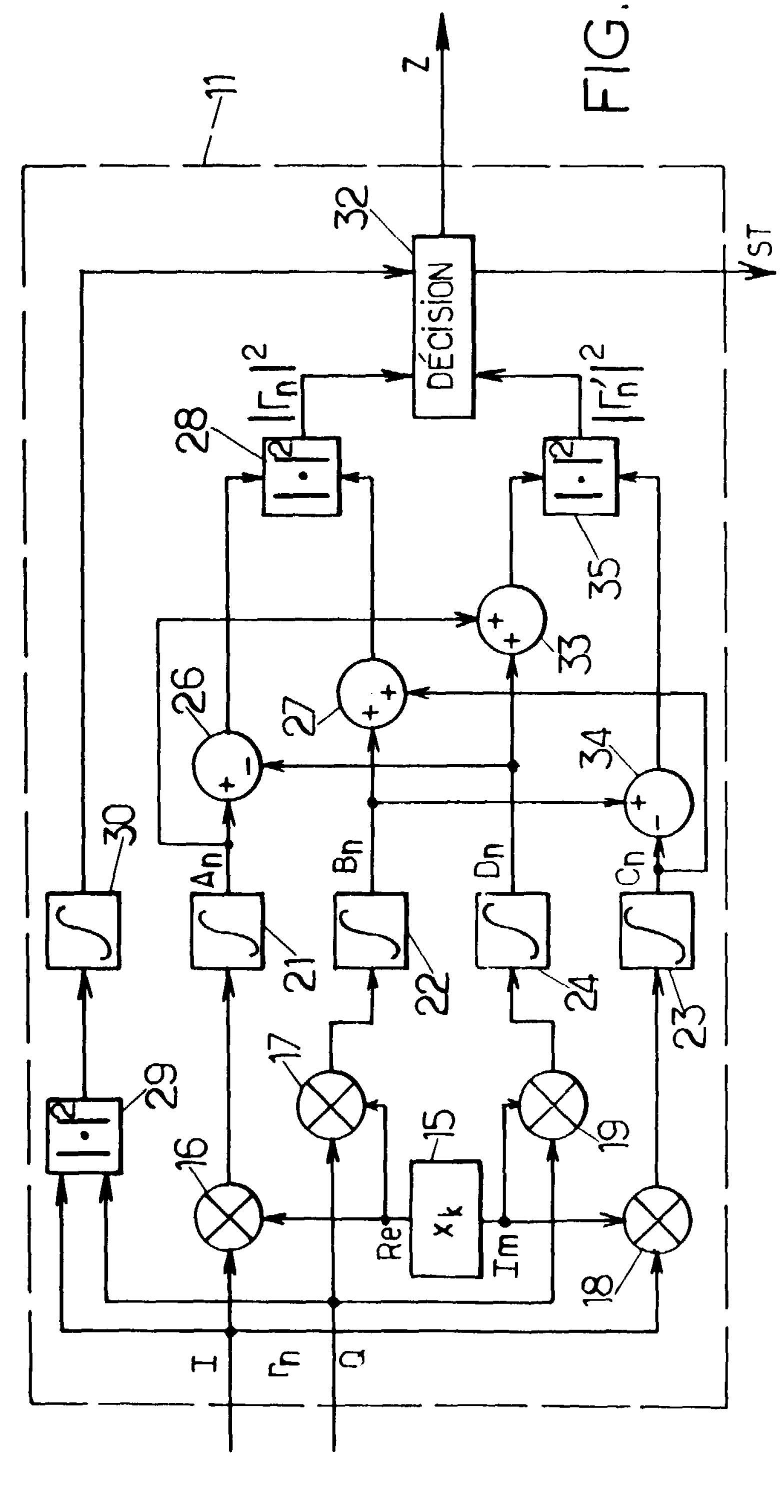
I
rn
Q
Re
Im
xk
An
Bn
Dn
Cn
|rn|2
|r'n|2
DÉCISION
Z
ST
11
15
16
17
18
19
21
22
23
24
26
27
28
29
30
32
33
34
35

FIG.4.

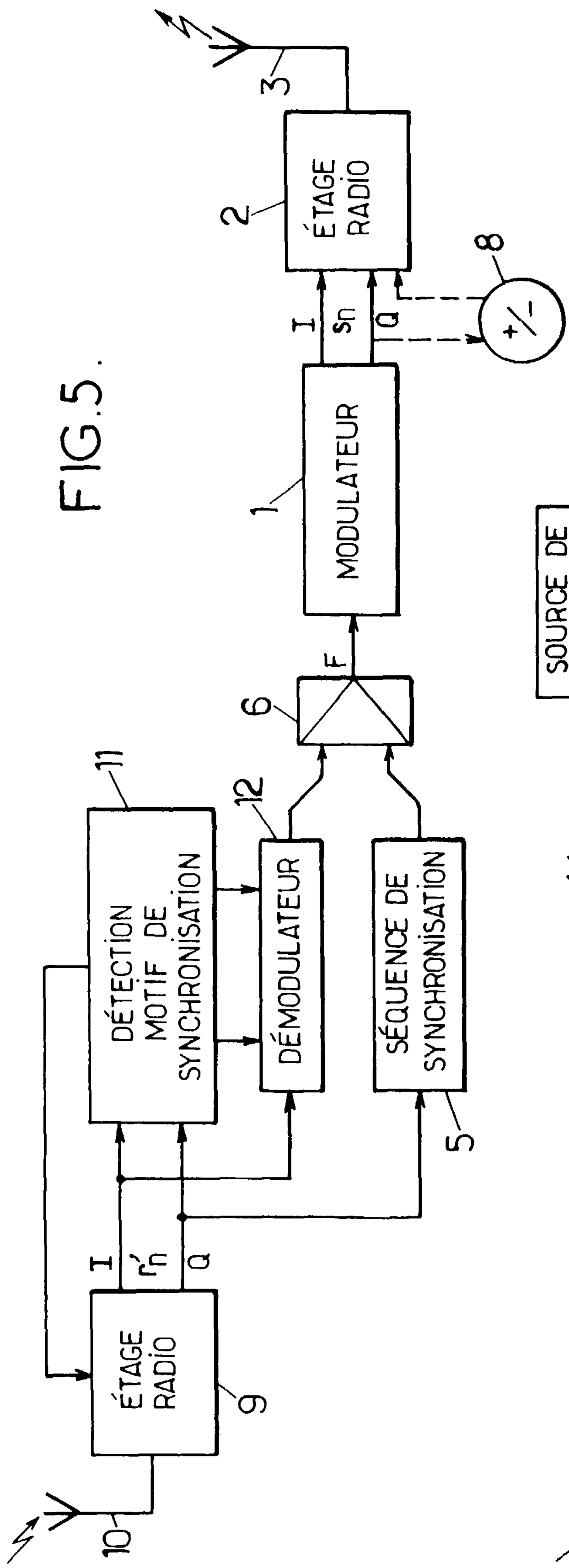
ÉTAGE RADIO
MODULATEUR
I
Sn
Q
+/-
DÉTECTION MOTIF DE SYNCHRONISATION
DÉMODULATEUR
SÉQUENCE DE SYNCHRONISATION
ÉTAGE RADIO
I
r'n
Q
F
1
2
3
5
6
8
9
10
11
12

FIG.5.

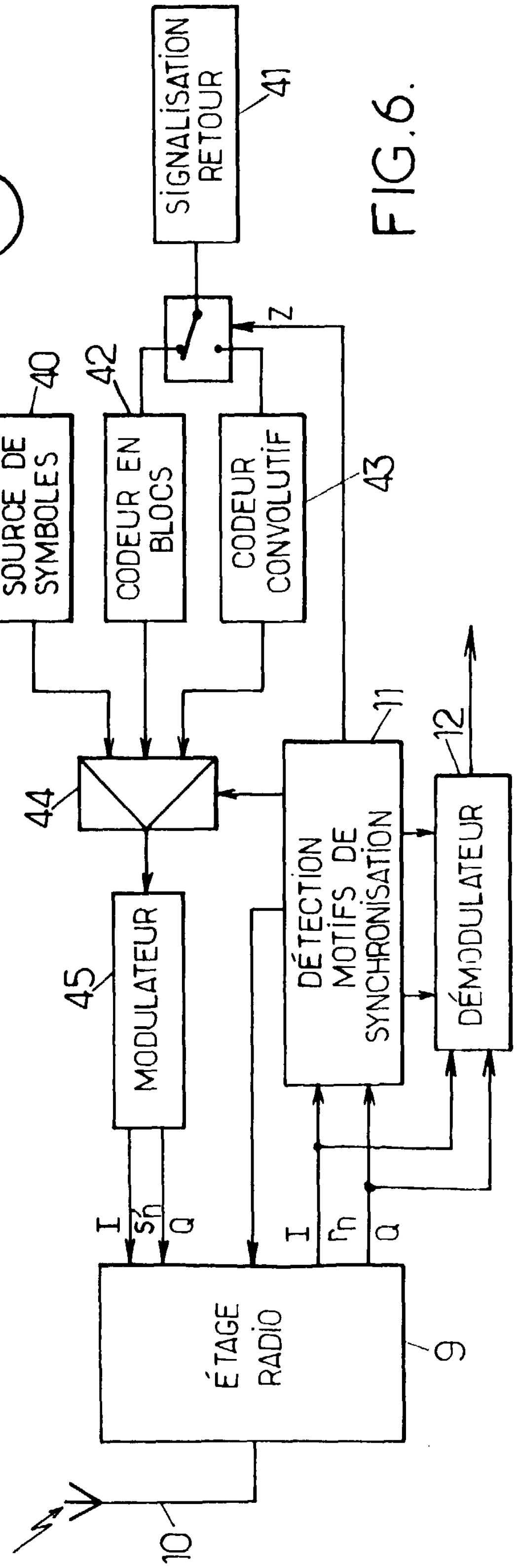
SIGNALISATION RETOUR
SOURCE DE SYMBOLES
CODEUR EN BLOCS
CODEUR CONVOLUTIF
Z
MODULATEUR
DÉTECTION MOTIFS DE SYNCHRONISATION
DÉMODULATEUR
ÉTAGE RADIO
I
Sn
Q
I
rn
Q
9
10
11
12
40
41
42
43
44
45

FIG.6.

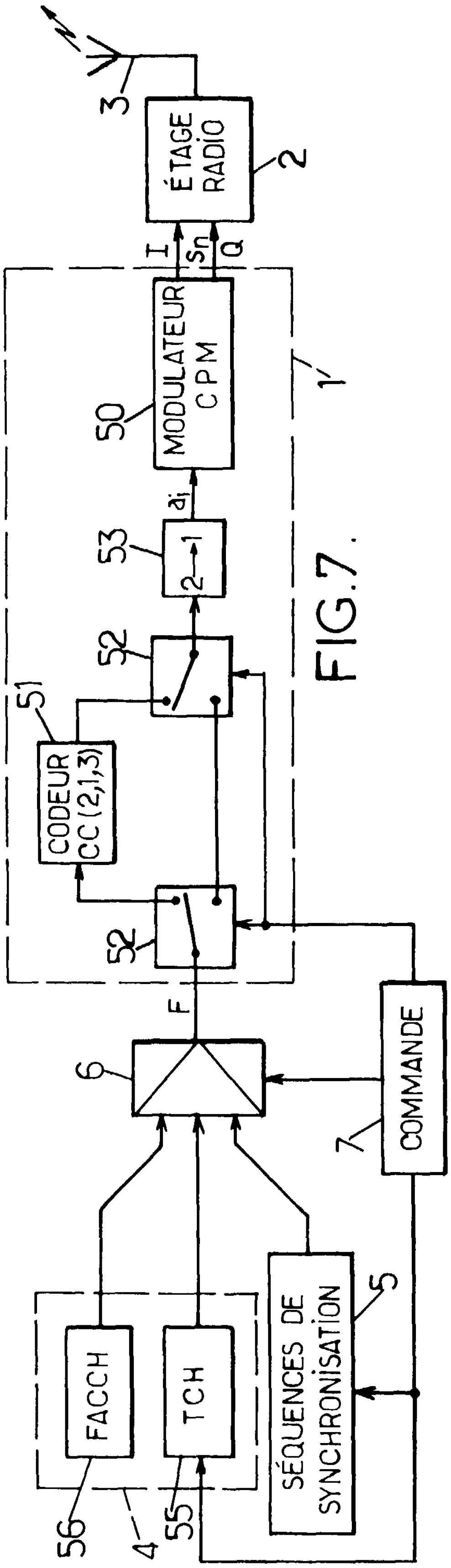
ÉTAGE RADIO
MODULATEUR CPM
CODEUR CC (2,1,3)
FACCH
TCH
SÉQUENCES DE SYNCHRONISATION
COMMANDE
I
Sn
Q
ai
F
2—1
1'
2
3
4
5
6
7
50
51
52
53
55
56
FIG.7.

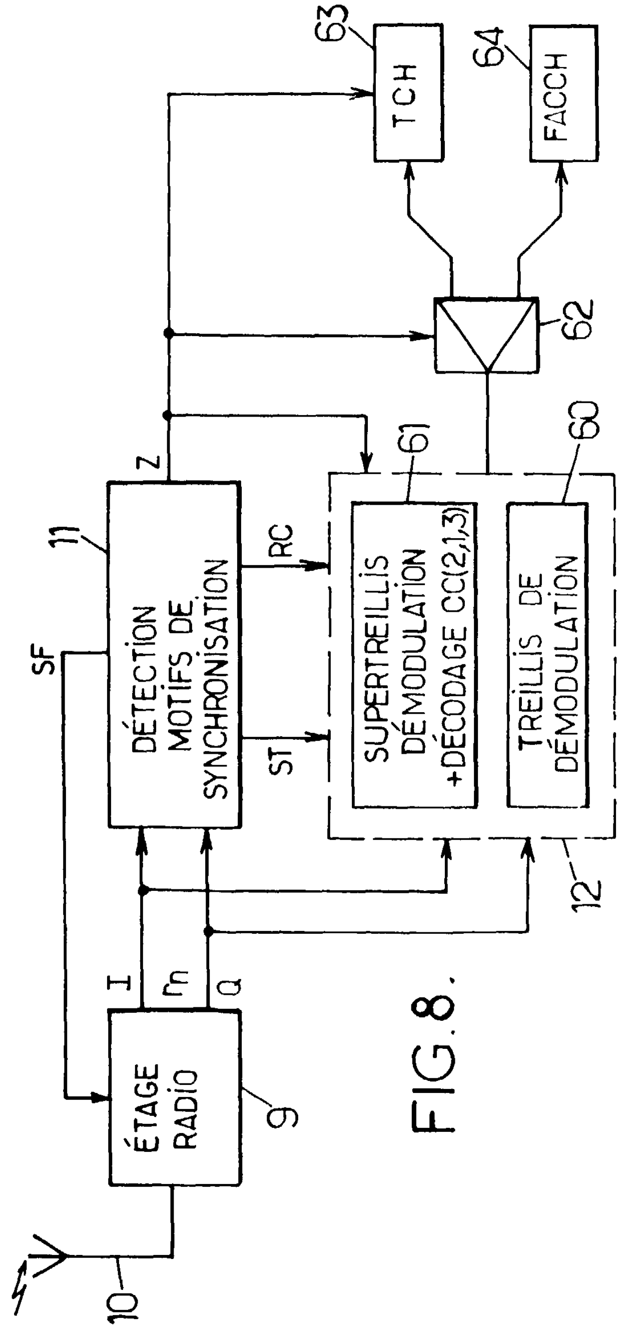
ÉTAGE RADIO
DÉTECTION MOTIFS DE SYNCHRONISATION
SUPERTREILLIS DÉMODULATION +DÉCODAGE CC(2,1,3)
TREILLIS DE DÉMODULATION
TCH
FACCH
SF
I
rn
Q
ST
RC
Z
9
10
11
12
60
61
62
63
64
FIG.8.

Office européen des brevets

# RAPPORT DE RECHERCHE EUROPEENNE

Numéro de la demande
EP 00 40 3391

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | WO 99 00927 A (GEN ELECTRIC)<br>7 janvier 1999 (1999-01-07)<br><br>* abrégé *<br>* page 3, ligne 1 - ligne 6 *<br>* page 4, ligne 22 - page 5, ligne 20 *<br>* page 7, ligne 19 - ligne 22 *<br>* page 9, ligne 4 - page 10, ligne 12 *<br>* page 11, ligne 1 - ligne 5 *<br>* page 14, ligne 4 - ligne 7 *<br>* page 15, ligne 1 - ligne 1 *<br>--- | 1-5,<br>11-15,<br>18-20,<br>24-27 | H04J3/06<br>H04J3/12<br>H04B7/26<br>H04L27/00<br>H04L25/02 |
| A | US 5 550 831 A (TANAHASHI KATSUHIKO)<br>27 août 1996 (1996-08-27)<br><br>* abrégé *<br>* colonne 2, ligne 1 - ligne 32 *<br>* colonne 3, ligne 5 - ligne 12 *<br>* colonne 6, ligne 54 - ligne 59 *<br>* colonne 7, ligne 27 - ligne 35 *<br>* colonne 2, ligne 1 - ligne 28 *<br>* colonne 3, ligne 5 - ligne 12 *<br>* colonne 6, ligne 54 - ligne 59 *<br>* colonne 7, ligne 27 - ligne 35 *<br>--- | 1,12,15,<br>17,20,<br>22,24-27 | **DOMAINES TECHNIQUES RECHERCHES (Int.Cl.7)**<br>H04J<br>H04L<br>H04B |
| A | US 4 649 543 A (LEVINE STEPHEN N)<br>10 mars 1987 (1987-03-10)<br><br>* abrégé; figures 7-21 *<br>* colonne 3, ligne 18 - ligne 52 *<br>* colonne 8, ligne 22 - colonne 9, ligne 37 *<br>* colonne 9, ligne 47 - colonne 10, ligne 4 *<br>* colonne 10, ligne 42 - ligne 53 *<br>* colonne 12, ligne 9 - ligne 29 *<br>---<br>-/-- | 1,4,12,<br>15,16,<br>18,21,<br>24-27 | |

Le présent rapport a été établi pour toutes les revendications

| Lieu de la recherche | Date d'achèvement de la recherche | Examinateur |
|---|---|---|
| LA HAYE | 16 mars 2001 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numéro de la demande
EP 00 40 3391

**DOCUMENTS CONSIDERES COMME PERTINENTS**

| Catégorie | Citation du document avec indication, en cas de besoin, des parties pertinentes | Revendication concernée | CLASSEMENT DE LA DEMANDE (Int.Cl.7) |
|---|---|---|---|
| A | D'ARIA G ET AL: "MODELLING AND SIMULATION OF THE PROPAGATION CHARACTERISTICS OF THE 900 MHZ NARROWBAND-TDMA CEPT/GSM MOBILE RADIO ( )"<br>VEHICULAR TECHNOLOGY CONFERENCE,US,NEW YORK, IEEE,<br>vol. CONF. 39, 1 mai 1989 (1989-05-01), pages 631-639, XP000076085<br>* page 634, colonne de droite, alinéa 2 - page 635, colonne de gauche, alinéa 4 *<br>--- | 1,9,15, 16,20, 25,27 | |
| A | DE 197 43 170 A (DAIMLER BENZ AG)<br>1 avril 1999 (1999-04-01)<br>* abrégé; revendications 1,3,10 *<br>* colonne 2, ligne 27 - ligne 35 *<br>* colonne 2, ligne 62 - colonne 3, ligne 2 *<br>--- | 1,13,19, 23,24,26 | |
| A | JOHNSON I R ET AL: "ON SUITABLE CODES FOR FRAME SYNCHRONISATION IN PACKET RADIO LANS"<br>PROCEEDINGS OF THE VEHICULAR TECHNOLOGY CONFERENCE,US,NEW YORK, IEEE,<br>vol. CONF. 44, 8 juin 1994 (1994-06-08), pages 1421-1424, XP000497655<br>ISBN: 0-7803-1928-1<br>* page 1422, colonne de gauche, alinéa 4 - alinéa 5 *<br>* page 1423, colonne de droite, alinéa 4 - page 1424, colonne de gauche, alinéa 1 *<br>--- | 1,15,20, 21,25,27 | DOMAINES TECHNIQUES RECHERCHES (Int.Cl.7) |
| A | WO 96 34481 A (RUDKIN PAUL WILLIAM ;IONICA INT LTD (GB)) 31 octobre 1996 (1996-10-31)<br>* page 3, alinéa 2 - alinéa 3 *<br>* page 4, alinéa 1 *<br>* page 11, alinéa 3 - page 13, alinéa 1; figure 5 *<br>---<br>-/-- | 1,4,16 | |

Le présent rapport a été établi pour toutes les revendications

| Lieu de la recherche | Date d'achèvement de la recherche | Examinateur |
|---|---|---|
| LA HAYE | 16 mars 2001 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numéro de la demande
EP 00 40 3391

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int.Cl.7) |
| A | EP 0 324 420 A (NIPPON ELECTRIC CO) 19 juillet 1989 (1989-07-19) * colonne 1, ligne 39 - colonne 3, ligne 10; figure 2 * | 5,24,26 | |
| A | OTSUKI S ET AL: "PERFORMANCE OF MODULATION-LEVEL-CONTROLLED ADAPTIVE MODULATION SYSTEMS" ELECTRONICS & COMMUNICATIONS IN JAPAN, PART I - COMMUNICATIONS,US,SCRIPTA TECHNICA. NEW YORK, vol. 79, no. 7, 1 juillet 1996 (1996-07-01), pages 81-93, XP000696376 ISSN: 8756-6621 * page 83, colonne de gauche, alinéa 2 * * page 84, alinéa 2.3 * * figures 2,3 * | 13,19,23 | |
| | | | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| LA HAYE | 16 mars 2001 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 00 40 3391

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-03-2001

| Document brevet cité au rapport de recherche | Date de publication | Membre(s) de la famille de brevet(s) | Date de publication |
|---|---|---|---|
| WO 9900927 A | 07-01-1999 | BR 9806229 A | 21-03-2000 |
| | | CN 1229550 T | 22-09-1999 |
| | | EP 0951766 A | 27-10-1999 |
| US 5550831 A | 27-08-1996 | JP 4262630 A | 18-09-1992 |
| US 4649543 A | 10-03-1987 | AU 6147886 A | 24-03-1987 |
| | | CA 1259659 A | 19-09-1989 |
| | | CN 86105396 A,B | 13-05-1987 |
| | | EP 0235179 A | 09-09-1987 |
| | | IL 79415 A | 05-11-1990 |
| | | IL 92969 A | 05-11-1990 |
| | | WO 8701490 A | 12-03-1987 |
| DE 19743170 A | 01-04-1999 | WO 9917479 A | 08-04-1999 |
| WO 9634481 A | 31-10-1996 | AU 5342196 A | 18-11-1996 |
| | | BR 9604991 A | 01-06-1999 |
| | | CN 1183192 A | 27-05-1998 |
| | | EP 0823169 A | 11-02-1998 |
| | | JP 11504178 T | 06-04-1999 |
| EP 0324420 A | 19-07-1989 | JP 1180130 A | 18-07-1989 |
| | | JP 2595602 B | 02-04-1997 |
| | | AU 2839889 A | 13-07-1989 |
| | | CA 1306011 A | 04-08-1992 |
| | | DE 68916656 D | 18-08-1994 |
| | | DE 68916656 T | 24-11-1994 |
| | | US 5020131 A | 28-05-1991 |

EPO FORM P0460

Pour tout renseignement concernant cette annexe : voir Journal Officiel de l'Office européen des brevets, No.12/82